# EUROPÄISCHE PATENTSCHRIFT

(11) **EP 1 362 245 B1**
(45) Veröffentlichungstag und Bekanntmachung des Hinweises auf die Patenterteilung: **04.08.2004**
(21) Anmeldenummer: 02708200.7
(22) Anmeldetag: 02.02.2002
(51) Int. Cl.: G01S 13/93, B60R 21/01, B60K 31/00

(54) **VERFAHREN ZUR STEUERUNG UND AUSWERTUNG EINER VON MEHREREN ANWENDUNGEN GEMEINSAM GENUTZTEN SENSOREINRICHTUNG**
METHOD FOR CONTROLLING AND EVALUATING A SENSOR DEVICE SHARED BY A PLURALITY OF APPLICATIONS
PROCEDE DE COMMANDE ET D'EVALUATION D'UN DISPOSITIF DE DETECTION PARTAGE PAR PLUSIEURS APPLICATIONS

(30) Priorität: 16.02.2001 DE 10107215
(43) Veröffentlichungstag der Anmeldung: 19.11.2003
(73) Patentinhaber: ROBERT BOSCH GMBH, 70442 Stuttgart (DE)
(72) Erfinder: SCHLICK, Michael, 76372 Pfinztal (DE); HOETZEL, Juergen, 61197 Florstadt (DE); HEIN, Andreas, 63843 Niedernberg (DE)
(86) Internationale Anmeldenummer: PCT/DE2002/000388
(87) Internationale Veröffentlichungsnummer: WO 2002/067012

(56) Entgegenhaltungen:
- EP-A- 0 899 583
- WO-A-00/73818
- DR. M. KUNERT: "Radarbasierte Nahfeldsensorik zur Precrash Sensierung" VDI BERICHTE 1471, 30. September 1999 (1999-09-30), Seiten 169-185, XP002203526 Berlin
- J. WELLER: "Vorausschauende Sensorik für zukünftige Sicherheitssysteme" VDI BERICHTE 1471, 30. September 1999 (1999-09-30), Seiten 229-236, XP002203527 Berlin

## Beschreibung

### STAND DER TECHNIK

Die vorliegende Erfindung betrifft eine Vorrichtung zur Steuerung und Auswertung mindestens einer von mehreren Anwendungen, insbesondere Insassenassistenz-/Insassenschutzanwendungen in Fortbewegungsmitteln, gemeinsam genutzten Sensoreinrichtung sowie ein entsprechendes Verfahren, beispielsweise gemäß Dokument EP0 899583A2.

Obwohl auf beliebige Fortbewegungsmittel anwendbar, werden die vorliegende Erfindung sowie die ihr zugrundeliegende Problematik in Bezug auf ein an Bord eines Kraftfahrzeuges befindliches System erläutert.

Um ein Fahren mit einem Kraftfahrzeug zu erleichtern und-Zusammenstöße mit einem Wagen oder anderen im Weg befindlichen Gegenständen zu verhindern, ist es bekannt, an bestimmten Stellen des Kraftfahrzeuges Sensoren vorzusehen, welche Signale aussenden, um die von dem Hindernis reflektierten Signale wieder zu empfangen. Dabei wird der Abstand zwischen dem am Kraftfahrzeug angeordneten Sensor und dem Hindernis aus der Laufzeit des Signals vom Sensor zum Hindernis und wieder zurück bestimmt. Zur Erfassung der Objekte, insbesondere zur Abstandsmessung sind verschiedene Vorrichtungen bekannt, die beispielsweise auf der Basis von Radar, Lasern, Ultraschall oder Videoanalyse arbeiten. Je nach Art der benötigten Messung kommen die unterschiedlichen Sensortechnologien zum Einsatz. Im Nahbereich kommen insbesondere Ultraschall-Sensoren wegen ihrer sehr hohen Auflösung zum Tragen.

Die Daten aus den Sensormessungen werden für verschiedene Anwendungen wie beispielsweise eine Einparkhilfe, eine im Stau nützliche Stop-and-Go-Assistenzhilfe oder eine Pre-Crash-Erkennung benötigt.

Bisher arbeitet jede Anwendung als separates System mit einem eigenen Satz an Sensoren, eigener Steuerungselektronik und eigener Software. Die Steuerbarkeit von Messungen beschränkt sich auf das Aktivieren und Deaktivieren der entsprechenden Sensoren. Somit kommt es bei einer parallelen Verwendung mehrerer Anwendungen zu Konfliktsituationen.

Zudem-können an einem Fahrzeug nicht beliebig viele Sensoren aufgrund eines begrenzt zur Verfügung stehenden Bauraums und einer komplizierten Verkabelung positioniert werden.

Die der vorliegenden Erfindung zugrundeliegende Problematik besteht also allgemein darin, die von einer Sensoreinrichtung empfangenen Sensorsignale mehrfach, d. h. für mehrere parallel laufende Anwendungen, nutzbar zu machen.

Zudem soll eine verbesserte Steuerbarkeit der Sensoren derart erzielt werden, dass Objekte im Überwachungsbereich gezielt verfolgt werden können.

### VORTEILE DER ERFINDUNG

Die der vorliegenden Erfindung zugrundeliegende Idee besteht darin, dass bestimmte Fortbewegungsmittel-Parameter durch eine Situationserfassungseinrichtung zur Bestimmung der Situation des Fortbewegungsmittels gegenüber seiner Umgebung erfasst werden; die Fortbewegungsmittel-Situation durch eine mit der Situationserfassungseinrichtung verbundenen Steuerungseinrichtung abgefragt wird; und dass eine der Fortbewegungsmittel-Situation entsprechende Anwendung mit ihren benötigten Komponenten durch die Steuerungseinrichtung aktiviert wird.

Das erfindungsgemäße Verfahren mit den Merkmalen des Anspruchs 1 und die entsprechende Vorrichtung gemäß Anspruch 11 weist gegenüber den bekannten Systemen den Vorteil auf, dass bei einem Zugriff mehrerer Anwendungen auf eine gemeinsame Sensoreinrichtung eine Konfliktsituation erkennbar ist und entsprechend darauf reagiert werden kann. Somit blockieren die einzelnen Anwendungen die Sensoreinrichtung nicht gegenseitig.

Zudem muss nicht für jede Anwendung eine eigene Sensoreinrichtung angebracht werden, was platzsparend und mit weniger Einbauaufwand aufgrund einer geringeren Verkabelung verbunden ist.

In den Unteransprüchen finden sich vorteilhafte Weiterbildungen und Verbesserungen des in Anspruch 1 angegebenen Verfahrens und der in Anspruch 11 angegebenen Vorrichtung.

Gemäß einer bevorzugten Weiterbildung sind die der aktivierten Anwendung zugeordneten Komponenten durch die Steuerungseinrichtung entsprechend aktivierbar. Somit erfolgt keine Transformation bzw. Auswertung der Messdaten für alle, sondern lediglich für die erforderlichen Komponenten. Der geringere Rechenaufwand beschleunigt und vereinfacht den gesamten Prozessablauf.

Gemäß einer weiteren bevorzugten Weiterbildung ist eine Transformationseinrichtung vorgesehen, deren Ergebnisse von mehreren Anwendungen verwendet werden.

Gemäß einer weiteren bevorzugten Weiterbildung ist eine Sensoreinrichtungsansteuerung vorgesehen, deren Ergebnisse von mehreren Transformationseinrichtungen verwendet werden. Dadurch können die Sensoreinrichtungen optimal eingesetzt und ausgenutzt werden.

Gemäß einer weiteren bevorzugten Weiterbildung sind die der entsprechenden Anwendung zugeordneten Komponenten als Sensoreinrichtung, Transformationseinrichtung und Auswertungseinrichtung ausgebildet. Dabei sind diese Komponenten ebenso wie die Situationserfassungseinrichtung jeweils durch beispielsweise eine Punkt-zu-Punkt-Verbindung oder ein Bus-System mit der Steuerungsreinrichtung verbindbar. Die Transformationseinrichtung ist zusätzlich mit der Sensoreinrichtung, und die Auswertungseinrichtung zusätzlich mit der Transformationseinrichtung verbindbar.

Gemäß einer weiteren bevorzugten Weiterbildung ist die Auswertungseinrichtung mit der Situationserfassungseinrichtung koppelbar. Somit berücksichtigt die Situationskomponente neben externen Ereignissen auch die Auswertungsergebnisse der entsprechenden Messung. Ein noch genaueres Reagieren auf die entsprechende Fortbewegungsmittel-Situation wird dadurch gewährleistet.

Gemäß einer weiteren bevorzugten Weiterbildung ist zusätzlich noch eine Anzeigeeinrichtung vorgesehen, die sowohl mit der Steuerungseinrichtung als auch mit der Auswertungseinrichtung verbindbar ist. Diese Anzeigeeinrichtung liefert die ausgewerteten Messdaten benutzerfreundlich an die entsprechenden Insassen des Kraftfahrzeuges.

Gemäß einer weiteren bevorzugten Weiterbildung ist in der Steuerungseinrichtung eine Prioritätenregelung für eine Bestimmung des nächsten auszuführenden Prozessschrittes vorgesehen. Somit werden zusätzlich Konfliktsituationen vermieden und die einer Fahrzeugsituation am besten entsprechende Anwendungen aktiviert. Alternativ kann die Steuerungseinrichtung auch eine Steuerung veranlassen, die einen Kompromiss zwischen den Wünschen der einzelnen Anwendungen darstellt und somit die Funktion aller Anwendungen gewährleistet.

Gemäß einer weiteren bevorzugten Weiterbildung ist die Sensoreinrichtung als Ultraschall-, Radar- oder Videoeinrichtung ausgebildet. Allerdings sind auch andere Sensortechnologien vorstellbar.

Gemäß einer weiteren bevorzugten Weiterbildung sind die Anwendungen beispielsweise als Einparkhilfe, Stop-and-Go-Assistenzhilfe und/oder Pre-Crash-Schutzhilfe ausgebildet. Auch hier sind weitere Anwendungen vorstellbar.

Gemäß einer weiteren bevorzugten Weiterbildung sind die Transformationseinrichtung und die Auswertungseinrichtung in die Steuerungseinrichtung integrierbar und bilden mit dieser zusammen eine zentrale Einheit. Dies erleichtert aufgrund einer möglichen Schnittstelle die Verbindung der einzelnen Komponenten untereinander und mit der Steuerungseinrichtung.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein schematisches Blockschaltbild einer Steuerungs-/Auswertungsvorrichtung gemäß einem Ausführungsbeispiel der vorliegenden Erfindung; und
- Fig. 2: ein schematisches Blockschaltbild eines Datenflusses innerhalb des Systems gemäß dem Ausführungsbeispiel der vorliegenden Erfindung in Fig. 1.

### BESCHREIBUNG DER AUSFÜHRUNGSBEISPIELE

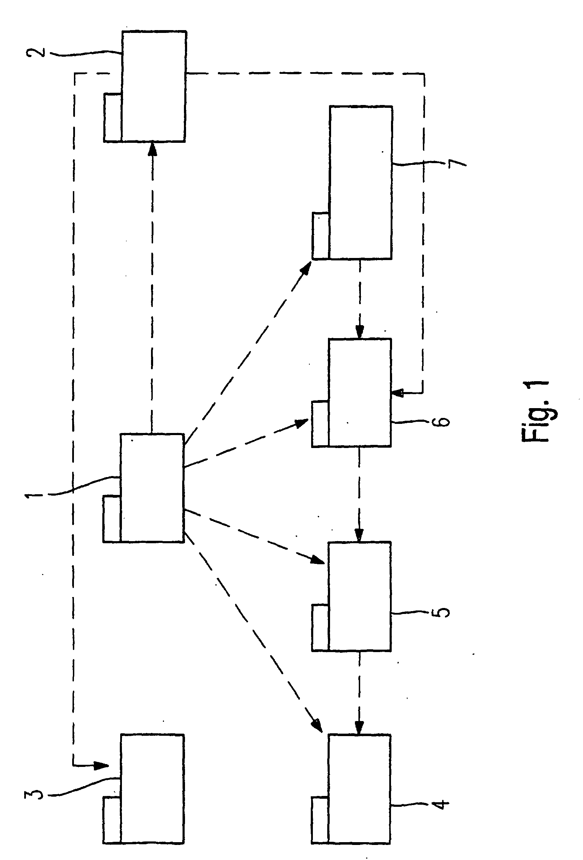

Fig. 1 zeigt in einem schematischen Blockschaltbild das Zusammenspiel der einzelnen Komponenten und Einrichtungen gemäß einem ersten Ausführungsbeispiel der vorliegenden Erfindung. Dabei bezeichnen die Pfeile zwischen den einzelnen Komponenten bzw. Einrichtungen eine Abhängigkeit einer Komponente bzw. Einrichtung von der sich an der Pfeilspitze befindenden Komponente bzw. Einrichtung.

Das System umfasst eine Situationserfassungseinrichtung 2, welche Bedingungen formuliert, aus denen sich mögliche Situationen des Kraftfahrzeugs in Relation zur Fahrzeugumgebung ableiten lassen. Dabei werden bestimmte Fahrzeugparameter 3 für eine Analyse der Fahrzeugsituation verwendet, wie beispielsweise Gangstellung, Raddrehzahl, Geschwindigkeitsanzeige, ABS-Weggeber etc. Nach diesen Parametern 3 lässt sich die augenblickliche Situation des Fahrzeuges durch die Situationserfassungseinrichtung 2 bestimmen, d. h. befindet sich das Kraftfahrzeug augenblicklich eher in einer Einparksituation, einer Normalfahrt, oder beispielsweise einer Pre-Crash-Situation. Zusätzlich kann in der Situationserfassungseinrichtung 2 eine Prioritätenregelung vorgesehen sein, die in eventuellen Konfliktsituationen der einzelnen Anwendungen einer prioritätshöheren Anwendung den Vorzug erteilt. Beispielsweise wäre einer Pre-Crash-Situation gegenüber einer Stop-and-Go-Situation eine höhere Priorität aus Sicherheitsgründen zuzuweisen.

Die Situationserfassungseinrichtung 2 ist mit einer Steuerungseinrichtung 1 verbunden, wobei allgemein die einzelnen Verbindungen jeweils vorteilhaft über eine Punkt-zu-Punkt-Verbindung oder ein Bus-System realisiert werden.
Die Steuerungseinrichtung 1 erhält von der Situationserfassungseinrichtung 2 die augenblickliche Kraftfahrzeugsituation und aktiviert die dieser Situation am günstigsten erscheinende Anwendung.

Dabei benutzt die Steuerungseinrichtung 1 die Situationserfassungseinrichtung 2 und alle im weiteren ausführlicherbeschriebenen Komponenten 4, 5, 6, 7 der einzelnen Anwendungen über entsprechende Schnittstellen und bestimmt somit den Ablauf der als nächstes auszuführenden Prozess- bzw. Verarbeitungsschritte in Abhängigkeit von der jeweiligen Fahrzeugsituation. Dabei kann auch in der Steuerungseinrichtung 1 eine Prioritätenregelung vorgesehen sein.

Mit der Steuerungseinrichtung 1 ist eine Sensoreinrichtung 4 verbunden, die alle Details im Zusammenhang mit den Sensor-Messungen realisiert und die als Hardware-Komponente umgesetzt werden kann.

Des weiteren ist eine Transformationseinrichtung 5 mit der Steuerungseinrichtung 1 und mit der Sensoreinrichtung 4 verbunden. Die Transformationseinrichtung 5 benutzt die Messdaten der Sensoreinrichtung 4 über eine entsprechende Schnittstelle und wandelt diese in Zustandsgrößen um, die den jeweiligen Fahrzeugstatus beschreiben. Diese Beschreibung kann die Form einer Objektliste aufweisen. Hierbei beschreibt ein Objekt ein Hindernis im Raum. Die Beschreibung umfasst z.B. die Raum- und Bewegungskoordinaten. Die Zustandsgrößen wiederum werden über eine entsprechende Schnittstelle für eine Auswertung bereitgestellt.

Eine solche Auswertung wird durch eine Auswertungseinrichtung 6 übernommen, welche mit der Steuerungseinrichtung 1 und der Transformationseinrichtung 5 verbunden ist. Die Auswertungseinrichtung 6 analysiert die Zustandsgrößen der Transformationseinrichtung 5 hinsichtlich der jeweils aktiven Anwendung. Somit kann der Fahrzeugstatus beispielsweise als Eingabe für eine Einparkhilfe oder eine Pre-Crash-Anwendung verwendet werden.

Zusätzlich ist vorteilhaft eine Anzeigeeinrichtung 7 vorgesehen, welche mit der Steuerungseinrichtung 1 und der Auswertungseinrichtung 6 auf an sich bekannter Weise verbunden ist. Die Anzeigeeinrichtung 7 kann sowohl als optische Einrichtung als auch als akustische Einrichtung ausgebildet sein und den Insassen des Kraftfahrzeuges entweder Ergebnisse der Auswertung, beispielsweise Distanzen zum nächsten Hindernis, anzeigen, oder Warnsignale bei Unterschreitung eines bestimmten Abstandes zum nächsten Hindernis übermitteln.

Vorteilhaft ist auch eine Kopplung der Auswertungseinrichtung 6 an die Situationserfassungseinrichtung 2 realisiert, wodurch die Steuerungseinrichtung 1 eine sehr viel realistischere Fahrzeugsituationsbestimmung aufgrund der Berücksichtigung sowohl von Fahrzeugparametern 3 als auch von Auswertungsergebnissen vornehmen kann.

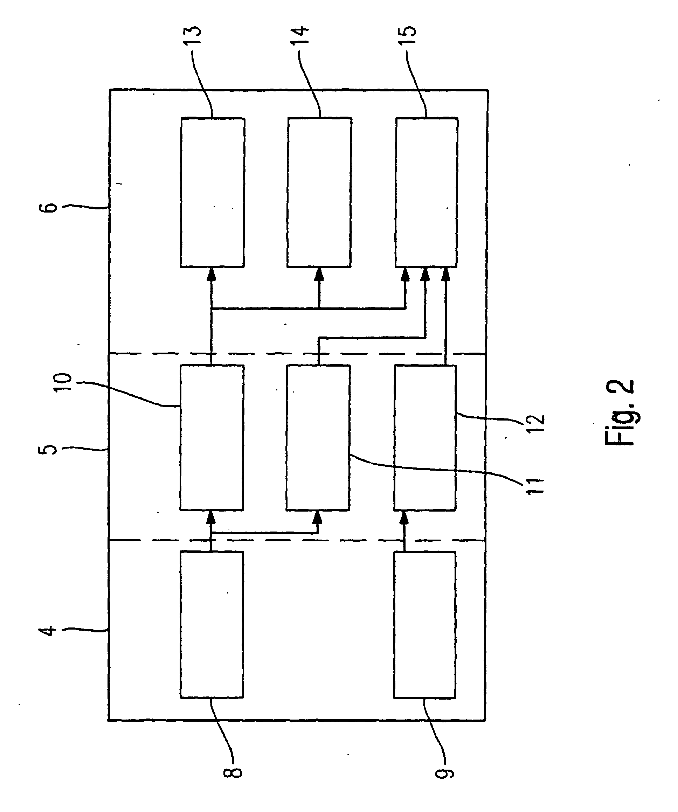

Anhand der Figur 2 soll dieses Prinzip beispielhaft erläutert werden, wobei beispielhaft ein schematisches Blockschaltbild eines Datenflusses innerhalb der Algorithmik gemäß einem Ausführungsbeispiel der vorliegenden Erfindung dargestellt ist.

Ausgehend von einer von der Sensoreinrichtung 4 durchgeführten Messung, beispielsweise einer Abstandsmessung 8 oder einer Geschwindigkeitsmessung 9, fließt die Information über die entsprechende Verbindung zur Transformationseinrichtung 5.

Dabei sind die Sensoren der Sensoreinrichtung 4 steuerbar. Zudem unternimmt das System laufend Messungen 8, 9 und passt sich somit den ändernden Fahrzeugsituationen schnell an. Die Steuerungseinrichtung 1 kann online auf die augenblickliche Fahrzeugsituation reagieren und die jeweils benötigte Anwendung mitsamt ihren Komponenten aktivieren.

Die Transformationseinrichtung 5 wandelt die Messdaten in den Fahrzeugstatus beschreibende Zustandsgrößen 10, 11, 12 um, beispielsweise ob es sich bei dem im Bereich des Kraftfahrzeuges befindlichen Objekt um ein langsames (Transformation 10), schnelles (Transformation 11) oder sogar um ein gefährlich schnelles Objekt (Transformation 12) handelt.

Daraufhin werden diese Zustandsgrößen von der Auswertungseinrichtung 6 jeweils applikationsspezifisch analysiert. Je nach dem, ob aufgrund der augenblicklichen Fahrzeugsituation eine Einparkhilfe 13, eine Stop-and-Go-Anwendung 14 oder eine Pre-Crash-Erkennung 15 sinnvoll ist, werden die Zustandsgrößen für die jeweilige Anwendung nutzbar gemacht.

Die vorliegende Erfindung besitzt den Vorteil, dass die verschiedenen Komponenten einer Sensoreinrichtung 4, Messung und Transformation, von verschiedenen Anwendungen gleichzeitig benutzt werden können. Durch diese Struktur ist es möglich, zu erkennen, welche Anwendung welche Verarbeitungskomponenten benötigt. Beispielsweise benötigt, wie in Fig. 2 ersichtlich, eine Einparkhilfe ihre spezifische Auswertung, eine Transformation für langsame Objekte und eine Abstandsmessung.

Dies ermöglicht eine modulare Steuerung des Messsystems. Denn je nach aktivierter Anwendung werden die entsprechenden Komponenten aktiviert. Darüber hinaus ist es möglich, weitere Anwendungen in das System einzubinden, indem nur die entsprechend neue Auswertungskomponente ergänzt wird.

Außerdem wird durch die Transformation mittels der Transformationseinrichtung 5 eine Beschreibung des relevanten Objektes erzeugt, die unabhängig von der eigentlichen Auswertung ist. Somit muss die Beschreibung nur einmal und nicht für alle Anwendungen einzeln ausgerechnet werden. Zudem greifen die Anwendungen nicht direkt auf die Sensoren zu, sondern auf eine höhere Schnittstelle.

Die Mehrfachnutzung von Messungen und Zwischenergebnissen ist gleichbedeutend mit einer Mehrfachnutzung von Sensoren und Teilalgorhitmen. Durch die Einführung der Situationskomponente wird zudem die gezielte Steuerung der Ressourcen, beispielsweise der Sensoren und der Prozessorzeit, sowohl für Einzelanwendungen als auch für eine Kombination von Anwendungen mit verschiedenen Prioritäten möglich.

Die Kopplung der aktuellen Situation an Ergebnisse von Sensormessungen erlaubt zusätzlich die gezielte Einstellung des Messbereichs für nachfolgende Messungen und die Verfolgung von Objekten für bestimmte Anwendungen. Damit ist eine verbesserte Steuerbarkeit der Sensoren gewährleistet.

Obwohl die vorliegende Erfindung anhand eines bevorzugten Ausführungsbeispiels vorstehend beschrieben wurde, ist sie darauf nicht beschränkt sondern auf vielfältige Weise modifizierbar.

Beispielsweise kann die Sensoreinrichtung als Videoeinrichtung ausgebildet sein, wodurch eine Objektklassifikation oder ein Fahrspurwechsel feststellbar und entsprechende Anwendungen aktivierbar wären.

Es ist auch möglich, die vorliegende Erfindung für gemischte Sensoreinrichtungen einzusetzen, beispielsweise für Video und Radar.

## Patentansprüche

1. Verfahren zur Steuerung und Auswertung mindestens einer von mehreren Anwendungen, insbesondere Insassenassistenz-/Insassenschatzanwendungen in Fortbewegungsmitteln, gemeinsam genutzten Sensoreinrichtung (4), mit folgenden Schritten,
- Erfassen bestimmter Fortbewegungsmittelparameter (5) durch eine Situationserfassungseinrichtung (2) zur Bestimmung der Situation des . Fortbewegungsmittels gegenüber seiner Umgebung;
- Abfragen der Fortbewegungsmittel-Situation durch eine mit der Situationserfassungseinrichtung (2) verbundenen Steuereinrichtung (1); **gekennzeichnet durch**:
- Aktivieren einer der Fortbewegungsmittelsituation entsprechenden Anwendung und der Anwendung zugeordneten und mit der Sensoreinrichtung verbundenen Transformationseinrichtungen.

2. Verfahren nach Anspruch 1, **dadurch gekennzeichnet, dass** der aktivierten Anwendung zugeordnete Komponenten (4, 5, 6) durch die Steuerungseinrichtung (1) aktiviert werden.

3. Verfahren nach einem der Ansprüche 1 oder 2, **dadurch gekennzeichnet, dass** eine zugeordnete Komponente als Sensoreinrichtung (4) ausgebildet wird.

4. Verfahren nach einem der vorhergehenden Ansprüche, **dadurch gekennzeichnet, dass** eine der zugeordneten Komponenten als Auswertungseinrichtung (6) ausgebildet und mit der Transformationseinrichtung (5) verbunden wird.

5. Verfahren nach einem der vorhergehenden Ansprüche, **dadurch gekennzeichnet, dass** die Situationserfassungseinrichtung (2) und die einer Anwendung zugeordneten Komponenten (4, 5; 6) jeweils durch eine Punkt-zu-Punkt-Verbindung oder ein Bus-System mit der Steuerungseinrichtung (1) verbunden werden.

6. Verfahren nach einem,der vorhergehenden Ansprüche, **dadurch gekennzeichnet, dass** die Auswertungseinrichtung (6) mit der Situationserfassungseinrichfung (2) gekoppelt wird.

7. Verfahren nach einem der vorhergehenden Ansprüche, **dadurch gekennzeichnet, dass** eine Anzeigeeinrichtung (7) mit der Steuerungseinrichtung (1) und der Auswertungseinrichtung (6) verbunden wird.

8. Verfahren nach einem der vorhergehenden Ansprüche, **dadurch gekennzeichnet, dass** in die Steuerungseinrichtung (1) eine Prioritätenregelung für eine Bestimmung des nächsten auszuführenden Prozessschrittes integriert wird.

9. Verfahren nach einem der vorhergehenden Ansprüche, **dadurch gekennzeichnet, dass** die Sensoreinrichtung (4) als Ultraschall-, Radar- oder Videoeinrichtung ausgebildet wird.

10. Verfahren nach einem der vorhergehenden Ansprüche, **dadurch gekennzeichnet, dass** die Anwendungen beispielsweise als Einparkhilfe, Stop-and-Go-Assistenzhilfe und/oder Pre-Crash-Schutzhilfe ausgebildet werden.

11. Vorrichtung zur Steuerung und Auswertung mindestens einer von mehreren Anwendungen, insbesondere Insassenassistenz- / Insassenschutzanwendungen in Fortbewegungsmitteln, gemeinsam genutzten Sensoreinrichtung (4), mit:
- Sensoreinrichtung (4) zur Erfussung von Messdaten;
- einer Situationserfassamngseinrichtung (2) zum Erfassen bestimmter Fortbewegungsmittelparameter für eine Bestimmung der Situation des Fortbewegungsmittels gegenüber seiner Umgebung; und einer Steuerungseinrichtung (1), die mit der Situationserfassungseinrichtung (2) zum Abfragen der Fortbewegungsmittelsituation verbindbar ist, zum Aktivieren entsprechender mit der Steuerungseinrichtung (1) verbundener Anwendungen;
**gekennzeichnet durch**:
- den Anwendungen zugeordneten Transformationseinrichtungen, die mit der Sensoreinrichtung (4) verbindbar sind und **durch** die Steuerungseinrichtung (1) aktiviert werden.

12. Vorrichtung nach Anspruch 11, **dadurch gekennzeichnet, dass** der aktivierten Anwendung zugeordnete Komponenten (4, 5, 6) durch die Steuerungseinrichtung (1) aktivierbar sind.

13. Vorrichtung nach einem der Ansprüche 11 oder 12, **dadurch gekennzeichnet, dass** mindestens eine zügeordnete Komponente als Sensoreinrichtung (4) ausgebildet ist.

14. Vorrichtung nach Anspruch 11, **dadurch gekennzeichnet, dass** verschiedene Transformationseinrichtungen (5) auf die selben Ergebnisse der Sensoreinrichtungen (4) zugreifen.

15. Vorrichtung nach einem der Ansprüche 11 bis 14, **dadurch gekennzeichnet, dass** mindestens eine der zugeordneten Komponenten als Auswertungseinrichtung (6) ausgebildet und mit mindestens einer Transformationseinrichtung (5) verbindbar ist.

16. Vorrichtung nach Anspruch 15, **dadurch gekennzeichnet, dass** verschiedene Auswertungseinrichtungen (6) für verschiedene Anwendungen auf die selben Ergebnisse einer oder mehrerer Transformationseinrichtungen (5) zugreifen.

17. Vorrichtung nach einem der Ansprüche 11 bis 16, **dadurch gekennzeichnet, dass** die Situationserfassungseinrichtung (2) und die einer Anwendung zugeordneten Komponenten (4, 5, 6) jeweils durch beispielsweise eine Punkt-zu-Punkt-Verbindung oder ein Bus-System mit der Steuerungseinrichtung (1) verbindbar sind.

18. Vorrichtung nach einem der Ansprüche 11 bis 17, **dadurch gekennzeichnet, dass** die Auswertungseinrichtung (6) mit der Situationserfassungseinrichtung (2) koppelbar ist.

19. Vorrichtung nach einem der Ansprüche 11 bis 18, **dadurch gekennzeichnet, dass** eine Anzeigeeinrichtung (7) mit der Steuerungseinrichtung (1) und der Auswertungseinrichtung (6) verbindbar ist.

20. Vorrichtung nach einem der Ansprüche 11 bis 19, **dadurch gekennzeichnet, dass** in die Steuerungseinrichtung (1) eine Prioritätenregelung für eine Bestimmung des nächsten auszuführenden Prozessschrittes integrierbar ist.

21. Vorrichtung nach einem der Ansprüche 11 bis 20, **dadurch gekennzeichnet, dass** die Sensoreinrichtung (4) als Ultraschall-, Radar- oder Videoeinrichtung ausgebildet ist.

22. Vorrichtung nach einem der Ansprüche 11 bis 21, **dadurch gekennzeichnet, dass** die Anwendungen beispielsweise als Einparkhilfe, Stop-and-Go-Assistenzhilfe und/oder Pre-Crash-Schutzhilfe ausgebildet sind:

23. Vorrichtung nach einem der Ansprüche 11 bis 22, **dadurch gekennzeichnet, dass** die Transformationseinrichtung (5) und die Auswertungseinrichtung (6) in die Steuerungseinrichtung (1) integrierbar sind.

## Claims

1. Method for controlling and evaluating at least one sensor device (4) which is shared by a plurality of applications, in particular vehicle occupant assistance/vehicle occupant protection applications in means of locomotion, having the following steps:
- specific means of locomotion parameters (5) are sensed by means of a situation-sensing device (2) in order to determine the situation of the means of locomotion with respect to its environment;
- the situation of the means of locomotion is interrogated by a control device (1) connected to the situation-sensing device (2); **characterized by**:
- activation of an application corresponding to the situation of the means of locomotion and transformation devices which are assigned to the application and connected to the sensor device.

2. Method according to Claim 1, **characterized in that** components (4, 5, 6) which are assigned to the activated application are actuated by the control device (1).

3. Method according to one of Claims 1 or 2, **characterized in that** an assigned component is embodied as a sensor device (4).

4. Method according to one of the preceding claims, **characterized in that** one of the assigned components is embodied as an evaluation device (6) and is connected to the transformation device (5).

5. Method according to one of the preceding claims, **characterized in that** the situation-sensing device (2) and the components (4, 5; 6) which are assigned to an application are each connected to the control device (1) by means of a point-to-point connection or a bus system.

6. Method according to one of the preceding claims, **characterized in that** the evaluation device (6) is coupled to the situation-sensing device (2).

7. Method according to one of the preceding claims, **characterized in that** a display device (7) is connected to the control device (1) and to the evaluation device (6).

8. Method according to one of the preceding claims, **characterized in that** a priority control for determining the next process step to be carried out is integrated into the control device (1).

9. Method according to one of the preceding claims, **characterized in that** the sensor device (4) is embodied as an ultrasonic device, radar device or video device.

10. Method according to one of the preceding claims, **characterized in that** the applications are embodied, for example, as a parking aid, stop-and-go assistant and/or pre-crash protector.

11. Device for controlling and evaluating at least one sensor device (4) which is shared by a plurality of applications, in particular vehicle occupant assistance/vehicle occupant protection applications in means of locomotion, having:
- a sensor device (4) for sensing measured data;
- a situation-sensing device (2) for sensing specific means of locomotion parameters for determining the situation of the means of locomotion with respect to its surrounds; and
- a control device (1) which can be connected to the situation-sensing device (2) in order to interrogate the situation of the means of locomotion, in order to activate corresponding applications which are connected to the control device (1); **characterized by**:
- transformation devices which are assigned to the applications and which can be connected to the sensor device (4) and are activated by the control device (1).

12. Device according to Claim 11, **characterized in that** components (4, 5, 6) which are assigned to the activated application can be activated by means of the control device (1).

13. Device according to one of Claims 11 or 12, **characterized in that** at least one assigned component is embodied as a sensor device (4).

14. Device according to Claim 11, **characterized in that** various transformation devices (5) access the same results of the sensor devices (4).

15. Device according to one of Claims 11 to 14, **characterized in that** at least one of the assigned components is embodied as an evaluation device (6) and can be connected to at least one transformation device (5).

16. Device according to Claim 15, **characterized in that** various evaluation devices (6) for various applications access the same results of one or more transformation devices (5).

17. Device according to one of Claims 11 to 16, **characterized in that** the situation-sensing device (2) and the components (4, 5, 6) which are assigned to an application can each be connected to the control device (1) by means of, for example, a point-to-point connection or a bus system.

18. Device according to one of Claims 11 to 17, **characterized in that** the evaluation device (6) can be coupled to the situation-sensing device (2).

19. Device according to one of Claims 11 to 18, **characterized in that** a display device (7) can be connected to the control device (1) and to the evaluation device (6).

20. Device according to one of Claims 11 to 19, **characterized in that** a priority control for determining the next process step to be carried out can be integrated into the control device (1).

21. Device according to one of Claims 11 to 20, **characterized in that** the sensor device (4) is embodied as an ultrasonic device, radar device or video device.

22. Device according to one of Claims 11 to 21, **characterized in that** the applications are embodied, for example, as a parking aid, stop-and-go assistant and/or pre-crash protector.

23. Device according to one of Claims 11 to 22, **characterized in that** the transformation device (5) and the evaluation device (6) can be integrated into the control device (1).

## Revendications

1. Procédé de commande et d'évaluation d'au moins un dispositif de détection (4) partagé par plusieurs applications, notamment des applications d'assistance aux passagers /de protection intérieure des occupants dans des moyens de déplacement, comprenant les étapes suivantes :
- acquérir des paramètres déterminés du moyen de déplacement (5) par un dispositif d'acquisition de position (2) pour déterminer la position du moyen de déplacement par rapport à son environnement ;
- interroger la position du moyen de déplacement par un dispositif de commande (1) relié au dispositif d'acquisition de position (2),
**caractérisé par**
- l'activation d'une application correspondant à la position du moyen de déplacement et des dispositifs de transformation associés à l'application et reliés au dispositif de détection.

2. Procédé selon la revendication 1,
**caractérisé en ce que**
des composants (4, 5, 6) associés à l'application activée sont activés par le dispositif de commande (1).

3. Procédé selon l'une des revendications 1 ou 2,
**caractérisé en ce que**
un composant associé est configuré sous la forme de dispositif de détection (4).

4. Procédé selon l'une des revendications précédentes,
**caractérisé en ce que**
un des composants associés est configuré sous la forme de dispositif d'évaluation (6) et est relié à un dispositif de transformation (5).

5. Procédé selon l'une des revendications précédentes,
**caractérisé en ce que**
le dispositif d'acquisition de position (2) et les composants (4, 5, 6) associés à une application sont respectivement reliés au dispositif de commande (1) par une liaison point à point ou par un système bus.

6. Procédé selon l'une des revendications précédentes,
**caractérisé en ce que**
le dispositif d'évaluation (6) est accouplé au dispositif d'acquisition de position (2).

7. Procédé selon l'une des revendications précédentes,
**caractérisé en ce que**
un dispositif d'affichage (7) est relié au dispositif de commande (1) et au dispositif d'évaluation (6).

8. Procédé selon l'une des revendications précédentes,
**caractérisé en ce que**
dans le dispositif de commande (1), une commande des priorités est intégrée pour déterminer l'étape de traitement suivant à réaliser.

9. Procédé selon l'une des revendications précédentes,
**caractérisé en ce que**
le dispositif de détection (4) est configuré sous la forme d'un dispositif à ultrasons, radar ou vidéo.

10. Procédé selon l'une des revendications précédentes,
**caractérisé en ce que**
les applications sont par exemple configurées sous la forme d'aide au stationnement, d'aide assistée au stop-and-go et/ou de protection assistée au « pre-crash ».

11. Dispositif de commande et d'évaluation d'au moins un dispositif de détection (4) partagé par plusieurs applications, notamment des applications d'assistance aux passagers /de protection intérieure des occupants dans des moyens de déplacement, comprenant :
- un dispositif de détection (4) destiné à acquérir des données de mesure,
- un dispositif d'acquisition de position (2) destiné à acquérir des paramètres déterminés du moyen de déplacement pour déterminer la position du moyen de déplacement par rapport à son environnement, et
- un dispositif de commande (1) qui peut être relié au dispositif d'acquisition de position (2) pour interroger la position du moyen de déplacement, permettant de l'activer avec les applications reliées au dispositif de commande (1),
**caractérisé en ce que**
- des dispositifs de transformation associés aux applications peuvent être reliés au dispositif de détection (4) et activés par le dispositif de commande (1).

12. Dispositif selon la revendication 11,
**caractérisé en ce que**
des composants (4, 5, 6) associés à l'application activée sont activés par le dispositif de commande (1).

13. Dispositif selon l'une des revendications 11 ou 12,
**caractérisé en ce que**
au moins un composant associé est configuré sous la forme de dispositif de détection (4).

14. Dispositif selon la revendication 11,
**caractérisé en ce que**
différents dispositifs de transformation (5) accèdent aux mêmes résultats des dispositifs de détection (4).

15. Dispositif selon l'une des revendications 11 à 14,
**caractérisé en ce que**
au moins un des composants associés est configuré sous la forme de dispositif d'évaluation (6) et peut être relié au moins à un dispositif de transformation (5).

16. Dispositif selon la revendication 15,
**caractérisé en ce que**
différents dispositifs d'évaluation (6) accèdent, pour différentes applications, aux mêmes résultats de l'un ou de plusieurs dispositif(s) de transformation (5).

17. Dispositif selon l'une des revendications 11 à 16,
**caractérisé en ce que**
le dispositif d'acquisition de position (2) et les composants (4, 5, 6) associés à une application peuvent respectivement être reliés au dispositif de commande (1) par exemple par une liaison point à point ou par un système bus.

18. Dispositif selon l'une des revendications 11 à 17,
**caractérisé en ce que**
le dispositif d'évaluation (6) peut être accouplé au dispositif d'acquisition de position (2).

19. Dispositif selon l'une des revendications 11 à 18,
**caractérisé en ce que**
un dispositif d'affichage (7) peut être relié au dispositif de commande (1) et au dispositif d'évaluation (6).

20. Dispositif selon l'une des revendications 11 à 19,
**caractérisé en ce que**
dans le dispositif de commande (1), une commande des priorités peut être intégrée pour déterminer l'étape de traitement suivant à réaliser.

21. Dispositif selon l'une des revendications 11 à 20,
**caractérisé en ce que**
le dispositif de détection (4) est configuré sous la forme d'un dispositif à ultrasons, radar ou vidéo.

22. Dispositif selon l'une des revendications 11 à 21,
**caractérisé en ce que**
les applications sont par exemple configurées sous la forme d'aide au stationnement, d'aide assistée au stop-and-go et/ou de protection assistée au « pre-crash ».

23. Dispositif selon l'une des revendications 11 à 22,
**caractérisé en ce que**
le dispositif de transformation (5) et le dispositif d'évaluation (6) peuvent être intégrés dans le dispositif de commande (1).
